Europäisches Patentamt

European Patent Office

Office européen des brevets

(11) Numéro de publication: **0 424 588 A1**

# DEMANDE DE BREVET EUROPEEN

(21) Numéro de dépôt: 89402977.6

(22) Date de dépôt: 27.10.89

(51) Int. Cl.⁵: **F16K 21/12**

(43) Date de publication de la demande:
02.05.91 Bulletin 91/18

(84) Etats contractants désignés:
AT BE CH DE ES GB GR IT LI LU NL SE

(71) Demandeur: ETABLISSEMENTS TROUVAY &
CAUVIN Société Anonyme
58, rue Général Chanzy
F-76097 Le Havre Cédex(FR)

Demandeur: LEZIER S.A.
Rue Félix Esclagon Z.I.
F-73290 La Motte Servolex (Savoie)(FR)

(72) Inventeur: Lezier, Pascal
407 Chemin de Coirat
La Motte Servolex savoie(FR)
Inventeur: Blot, Daniel
16 rue Chef de Caux
Sainte Adresse Seine Maritime(FR)
Inventeur: Colly Jean-Paul
19 Allée de Joliette
Le Havre Seine Maritime(FR)

(74) Mandataire: Cabinet Pierre HERRBURGER
115, Boulevard Haussmann
F-75008 Paris(FR)

(54) Vanne à fermeture automatique temporisée.

(57) Vanne à fermeture automatique temporisée comprenant un clapet principal (11) d'obturation du conduit d'écoulement de fluide et un clapet secondaire (22), de soulagement du clapet principal, vanne caractérisée en ce que les deux clapets principal (11) et secondaire (22) sont reliés mécaniquement l'un à l'autre par un dispositif de verrouillage (23, 24, 25) maintenant le clapet secondaire (22) en position d'ouverture dès son actionnement d'ouverture par le moyen de commande (29) et maintenant ce clapet secondaire (22) en position de fermeture dès son actionnement de fermeture par une butée (27) prévue dans la vanne.

FIG. 1

EP 0 424 588 A1

## VANNE À FERMETURE AUTOMATIQUE TEMPORISÉE

L'invention concerne une vanne à fermeture automatique temporisée.

Cette vanne comprend un clapet principal d'obturation du conduit d'écoulement de fluide et un clapet secondaire, de soulagement du clapet principal, disposés en liaison avec un moyen de commande de l'ouverture de la vanne. Ce clapet principal est solidaire d'un piston se déplaçant dans un cylindre à l'encontre d'un ressort, ce piston délimitant dans le cylindre deux chambres dont l'une est reliée à l'air libre et dont l'autre constitue une chambre de pression. Ces deux chambres sont en outre reliées par un orifice de fuite calibré, le clapet secondaire obturant un conduit d'écoulement du fluide vers cette chambre de pression.

Une telle vanne est, par exemple, décrite et représentée dans le brevet français N° 2 120 894. L'inconvénient principal de ce genre de vanne réside dans le fait qu'elle ne constitue pas une vanne automatique temporisée dans la mesure où la temporisation dépend de la force et de la durée de pression de l'opérateur sur le bouton de commande.

Vis-à-vis de cette vanne connue, la présente invention est caractérisée en ce que les deux clapets principal et secondaire sont reliés mécaniquement l'un à l'autre par un dispositif de verrouillage maintenant le clapet secondaire en position d'ouverture dès son actionnement d'ouverture par le moyen de commande et maintenant ce clapet secondaire en position de fermeture dès son actionnement de fermeture par une butée prévue dans la vanne.

Suivant une autre caractéristique de l'invention, le moyen de verrouillage du clapet secondaire dans les positions de fermeture et d'ouverture est constitué par un élément semi-rigide, déformable élastiquement, fixé à l'un des clapets et agissant, par une coopération d'encliquetage, avec l'autre clapet.

Suivant une autre caractéristique de l'invention, l'orifice de fuite calibré est constitué par une rainure de section constante calibrée, formée longitudinalement sur la paroi interne du cylindre.

Suivant le brevet allemand N° 551 976, on connaît également un autre genre de vanne dont la temporisation dépend dans ce cas non de la durée et de la force de pression de l'opérateur sur le bouton de commande mais de la pression de l'eau d'alimentation qui, en diminuant, doit être relativement faible. Dans ce cas, la vanne comporte un clapet principal double et un clapet secondaire double et le piston solidaire du clapet principal se déplace en fonction de la différence de pression du fluide sur les deux faces du piston dont l'une est en permanence soumise à la pression du circuit d'alimentation en eau. En outre, dans cette construction, le clapet secondaire est maintenu en position d'ouverture par un verrou dès sa commande d'ouverture, tandis qu'il est sensé être maintenu en position de fermeture sous l'action d'un ressort.

Suivant une autre caractéristique de l'invention, le clapet principal solidaire du piston s'applique sur un siège mobile, ce siège mobile constituant lui-même un clapet coopérant avec un siège correspondant du cylindre pour isoler ou relier la vanne à un orifice de vidange, cette disposition assurant la vidange automatique de la vanne après sa fermeture.

L'invention est représentée à titre d'exemple non limitatif sur les dessins ci-joints dans lesquels :
- la figure 1 est une vue en coupe axiale d'un mode de réalisation de la vanne,
- la figure 2 est une vue en coupe axiale d'un autre mode de réalisation de cette vanne.

La présente invention a en conséquence pour but la réalisation d'une vanne qui soit susceptible de commander l'écoulement d'un fluide, et notamment d'eau, à forte pression, sans nécessiter une puissance de manoeuvre importante, la durée d'ouverture de cette vanne étant temporisée sans pour cela nécessiter la mise en oeuvre d'un moyen de temporisation extérieur.

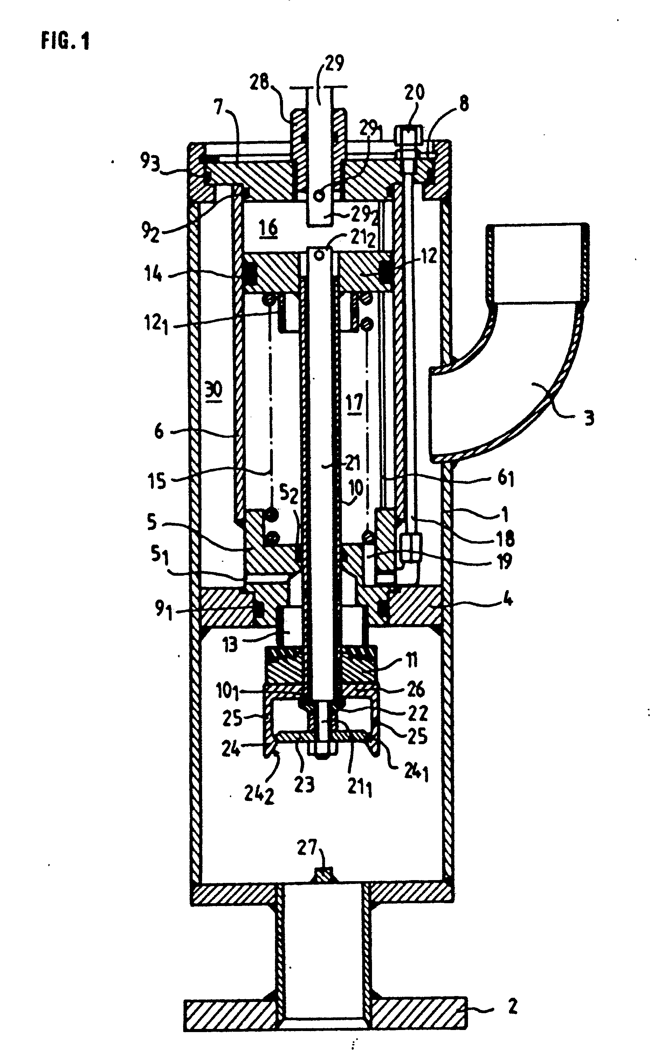

La vanne représentée sur la figure 1 se compose d'un corps 1 cylindrique à section circulaire, pourvu à son extrémité inférieure d'une bride 2 pour son raccordement sur une canalisation d'alimentation en fluide sous pression. L'ouverture de sortie du fluide est constituée par une portion de tube coudé 3 fixée par soudure au corps 1.

A l'intérieur du corps 1, en un point intermédiaire de sa longueur est fixée, par soudure, une pièce circulaire 4 qui sert d'appui à la pièce de fond 5 d'un cylindre 6. L'extrémité supérieure de ce cylindre est obturée par un couvercle 7 maintenu par ailleurs à l'extrémité supérieure du corps 1 par une bague fendue 8.

Des joints $9_1$, $9_2$, $9_3$ sont prévus pour assurer l'étanchéité du montage respectivement entre la pièce de base 5 et la pièce circulaire 4 entre le cylindre 6 et le couvercle 7 et entre ce couvercle 7 et le corps 1.

La pièce de base 5 du cylindre est pourvue d'un orifice axial pourvu d'un joint $5_2$ et qui est traversé à coulissement étanche par un tube cylindrique à section circulaire 10. Ce tube 10 est fixé par son extrémité inférieure à un clapet 11, dit clapet principal, et à son extrémité supérieure à un piston 12.

Le clapet 11 est destiné à s'appliquer de manière étanche sur un siège formé à l'extrémité inférieure d'une pièce rapportée 13 fixée à la pièce de base 5. Le piston 12 se déplace à l'intérieur du cylindre 6 et comporte à sa périphérie un joint d'étanchéité annulaire 14. Un ressort hélicoïdal 15 est disposé coaxialement autour du tube 10 entre la pièce de base 5 et le piston 12 afin de tendre constamment à éloigner ce piston 12 de la pièce de base.

Le piston 12 est pourvu sur sa face inférieure d'un prolongement circulaire $12_1$ servant de guide au ressort 15.

La paroi interne du cylindre 6 est pourvue d'une rainure longitudinale $6_1$ de section constante calibrée et qui constitue un orifice de fuite mettant en liaison la chambre supérieure 16 du cylindre, dite chambre de pression, avec la chambre inférieure 17 qui, elle, est mise à l'air libre par l'intermédiaire d'une tubulure 18 débouchant d'une part en 19 dans la pièce de base 5, c'est-à-dire à l'extrémité inférieure du cylindre 6, d'autre part en 20 au-dessus du couvercle 7, c'est-à-dire au-dessus de l'extrémité supérieure du cylindre 6.

A l'intérieur du tube 10 est disposée une tige 21 dont l'extrémité inférieure est pourvue d'un clapet 22, dit clapet secondaire, qui est susceptible de venir s'appliquer contre l'extrémité inférieure $10_1$ du tube 10 formant siège de clapet.

La tige 21 est pourvue d'un prolongement $21_1$ sur lequel est fixé un disque rigide 23. La périphérie biseautée de ce disque est appliquée contre l'un des deux bords obliques $24_1$, $24_2$ d'une saillie 24 formée à l'extrémité de languettes semi-rigides 25, déformables élastiquement, prévues sur une pièce 26 fixée également à l'extrémité inférieure du tube 10 contre le clapet principal 11.

L'extrémité inférieure du corps 1 pourvue de la bride 2 comporte une traverse 27 disposée en alignement avec l'extrémité du prolongement $21_1$ de la tige 21.

Le couvercle 7 prévu à l'extrémité supérieure du corps 1 comporte une traversée étanche permettant le passage à coulissement d'une tige 29 reliée à un bouton de commande (non représenté) et réalisé par exemple sous la forme d'un bouton-poussoir.

Cette tige 29 est constamment ramenée en position haute par un ressort, non représenté, de façon qu'en l'absence de commande du bouton une portion d'axe diamétral $29_1$ de la tige 21 soit maintenue contre l'extrémité inférieure de la traversée étanche 28. Par ailleurs, la longueur de la tige 21 est telle que lorsque le clapet principal 11 et le clapet secondaire 22 sont appliqués contre leur siège respectif, l'extrémité supérieure $21_2$ de la tige 21 est située à distance de l'extrémité inférieure $29_2$ de la tige de commande 29.

Le fonctionnement de cette vanne est le suivant.

Pour effectuer l'ouverture de la vanne, il convient d'actionner la tige 29 afin que son extrémité inférieure $29_2$ s'applique sur l'extrémité supérieure $21_2$ de la tige 21 en la repoussant. Le clapet 22 est alors séparé de son siège $10_1$ et lors de ce mouvement, les rebords biseautés du disque 23 repoussent élastiquement les saillies 24 des languettes 25 en matériau semi-rigide afin de se disposer du côté du flanc incliné inférieur $24_2$. Dans cette position, le clapet secondaire 22 est donc verrouillé en position d'ouverture et le fluide sous pression arrivant dans le corps de vanne 1 par la bride 2 passe par l'espace laissé libre entre la tige 21 et le tube 10 afin de remplir la chambre de pression 16.

Du fait de l'augmentation de la pression à l'intérieur de la chambre 16 et compte tenu que la chambre inférieure 17 est constamment mise à l'air libre, le fluide sous pression de cette chambre 16 repousse le piston 12 vers le bas du cylindre 6 à l'encontre du ressort 15, ce qui a pour effet d'écarter le clapet principal 11 de son siège. Le fluide sous pression s'écoule alors en passant au travers de la bague 13, des perçages latéraux $5_1$, de la pièce de base 5, du volume 30 formé entre la paroi extérieure du cylindre 6 et la paroi intérieure du corps 1 et le raccord coudé d'évacuation 3.

Ce mouvement de descente du piston 12 à l'encontre du ressort 15 se poursuit jusqu'à ce que l'extrémité inférieure $21_1$ de la tige 21 vienne s'appliquer contre la traverse 27 formant butée. A ce moment, le disque 23 est immobilisé et sa périphérie repousse élastiquement les saillies 24 des languettes semi-rigides 25 afin que cette périphérie vienne en appui contre les bords supérieurs inclinés $24_1$ de ces saillies. Dans cette position, le clapet secondaire 22 est revenu en appui contre son siège $10_1$ et empêche donc l'arrivée du fluide sous pression dans la chambre 16.

A partir de cet instant commence la temporisation conduisant à la fermeture de la vanne, cette vanne demeurant cependant totalement ouverte pendant toute la durée de cette temporisation.

La chambre 16 n'étant plus alimentée en fluide sous pression, le ressort 15 a tendance à faire remonter le piston 12 dans le cylindre 6, ce qui s'effectue à une vitesse déterminée par la section de la rainure de fuite $6_1$ formée de la paroi interne du cylindre.

La durée de temporisation est donc déterminée par la durée de remontée du piston 12 et se termine lorsque le clapet principal 11 revient s'appliquer sur son siège. A cet instant, la vanne se ferme complètement.

On remarquera que dès la commande d'ouverture de la vanne par l'actionnement de la tige 29, la tige 21 est repoussée et le piston 12 commence son mouvement de descente. Le cycle de fonctionnement aboutissant à la fermeture automatique temporisée de la vanne se poursuit alors sans qu'il soit possible d'intervenir sur ce cycle de fonctionnement, par exemple pour prolonger la temporisation. En effet, étant donné que la tige de commande 29 est séparée de la tige 21 dès l'ouverture du clapet secondaire 22 et l'ouverture corrélative du clapet principal 11, l'extrémité $21_2$ de la tige 21 s'éloigne de l'extrémité $29_2$ de la tige 29 et ne pourra plus être actionnée par cette tige 29 tant que la tige 21 ne sera pas revenue en position initiale, c'est-à-dire tant que la vanne ne sera pas revenue en position de fermeture.

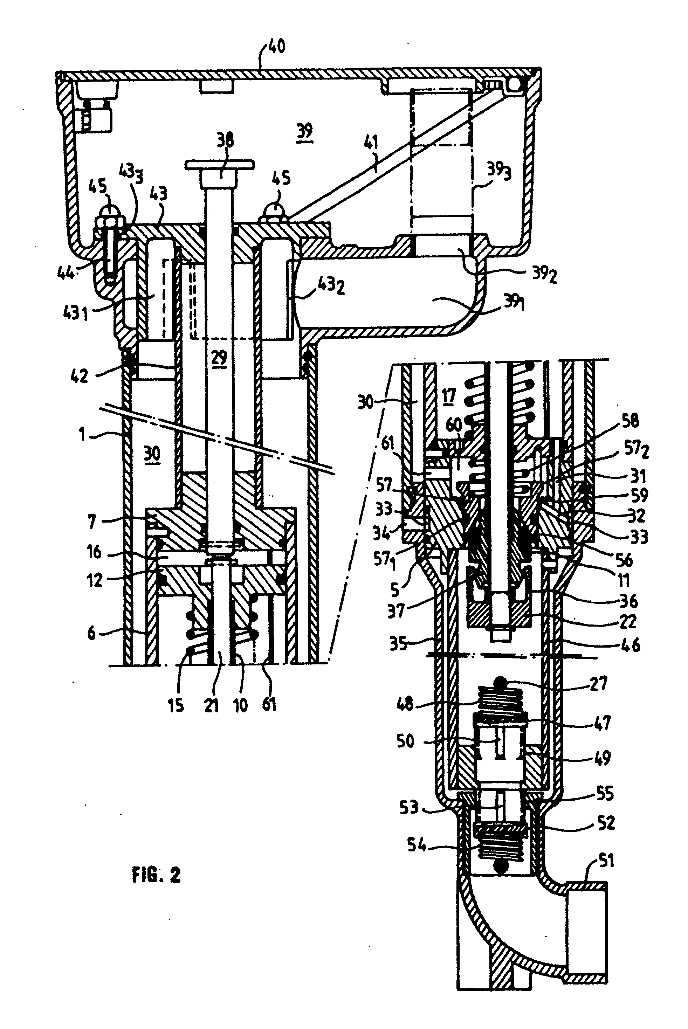

La vanne représentée sur la figure 2 constitue une variante de celle de la figure 1. Dans ce cas, il s'agit d'une vanne qui assure la vidange automatique du corps de vanne immédiatement après la fermeture de la vanne, afin d'éviter sa destruction en cas de gel.

En outre, cette vanne est de construction telle que son mécanisme interne constitue un sous-ensemble formant une cartouche qui peut s'enlever du corps de vanne sans être obligé d'interrompre préalablement l'alimentation de la vanne en fluide sous pression.

Egalement, cette vanne est réalisée d'une manière telle qu'elle évite la pénétration de salissures à l'intérieur du mécanisme formant le sous-ensemble de cette vanne, de façon à assurer son fonctionnement correct et éviter que ces salissures puissent être introduites ensuite dans le circuit d'alimentation d'eau de la vanne.

Les mêmes références que celles de la figure 1 seront utilisées sur cette figure 2 pour les organes identiques ou similaires.

Dans cet exemple, la chambre supérieure de compression 16 est reliée à l'air libre par l'intermédiaire de perçages 31 et 32 formés dans la pièce de base 5 et par l'intermédiaire d'une rainure circulaire 33 débouchant dans l'orifice de vidange 34 formé dans le prolongement 35 faisant partie du corps 1.

Le clapet secondaire 22 est pourvu de languettes élastiques semi-rigides 36 qui viennent s'encliqueter par un bossage d'extrémité sur une saillie latérale correspondante 37 du clapet principal 11.

L'extrémité supérieure de la tige 21 est disposée dans le prolongement d'une tige de manoeuvre coulissante indépendante 29 dont l'extrémité supérieure est pourvue d'un bouton de manoeuvre 38. Ce bouton 38 est situé à l'intérieur d'un boîtier 39 obturé par une trappe 40 disposée, par exemple, à niveau avec la surface d'un trottoir d'une rue. Cette trappe 40 est reliée au fond du boîtier 39 par une biellette 41.

Le couvercle 7 du cylindre est solidaire d'un tube entretoise 42 à l'intérieur duquel se déplace la tige 29. La longueur de ce tube est telle que le cylindre 1 et les clapets 11 et 22 sont situés à une distance de la trappe 40 qui est suffisante pour éviter, par temps froid, le gel de cette zone de la vanne. L'extrémité supérieure du tube 42 est solidaire d'une pièce 43 destinée à assurer le montage de la cartouche constituée du tube 42, du cylindre 6 et de toutes les pièces qu'il supporte, à l'intérieur du corps 1.

La pièce de montage 43 est pourvue d'une jupe $43_1$ partiellement évidée en $43_2$, cette partie évidée étant disposée en regard de la canalisation $39_1$ formée sous le boîtier 39 et qui conduit à l'ouverture $39_2$ du boîtier recevant le manchon $39_3$ de sortie d'eau.

La pièce 43, elle-même solidaire du cylindre 1, est fixée à l'intérieur du boîtier 39, par l'intermédiaire de tiges filetées 44 et d'écrous borgnes 45. Ces tiges filetées 44 sont logées dans des ouvertures allongées en arc de cercle $43_3$ de la pièce 43 afin de permettre le réglage de la position angulaire de la pièce 43 et, donc, le réglage du débit de la vanne en obturant plus ou moins la canalisation $39_1$ par la jupe $43_1$.

Le sous-ensemble disposé à l'intérieur du corps 1 constitue une cartouche amovible et comporte également une enceinte 46 fixée sous la pièce de base 5 et à l'intérieur de laquelle sont logés les clapets principal 11 et secondaire 22.

Cette enceinte 46 est obturée par un clapet 47 poussé par un ressort 48 en appui par ailleurs sur la traverse 27 formant butée de verrouillage pour le clapet secondaire 22.

Ce clapet 47 est guidé contre son siège 49 par des languettes de guidage 50 et est disposé de manière telle qu'il se sépare de son siège à l'encontre du ressort 48 sous l'action de la pression du fluide provenant du circuit d'alimentation relié au raccord 51.

Le corps 1 de la vanne est pourvu, entre le prolongement 35 et le dispositif de raccordement 51, d'un clapet 52 guidé par des languettes 53 et poussé par un ressort 54.

Ces languettes 53 sont d'une longueur telle que lorsque le clapet est en appui étanche contre son siège 55, l'extrémité de ces languettes 53 fait saillie à l'intérieur du prolongement 35. Ainsi, l'ouverture de ce clapet 52 ne se produit que lors de la mise en place du sous-ensemble formant cartouche et comprenant l'ensemble des pièces depuis la pièce de montage 43 jusqu'à l'enceinte 46. Cette disposition permet d'obtenir une coupure automatique de l'alimentation en fluide de la vanne lorsqu'on enlève le sous-ensemble, par exemple en vue de sa réparation ou de son remplacement.

Ainsi, lors de l'enlèvement de la cartouche, on obtient automatiquement la fermeture du clapet 52, ce qui a pour effet de couper l'arrivée de fluide et, donc, de fermer également le clapet 4. Lors de l'enlèvement de la cartouche, celle-ci se trouve donc automatiquement fermée de manière étanche de façon que des défectuosités de fonctionnement ne puissent pas ultérieurement se produire par suite de la pénétration de salissures à l'intérieur de cette cartouche lors de son enlèvement ou lors de sa mise en place.

Egalement, ce clapet 47 a pour effet d'éviter la pénétration accidentelle de liquide pollué pouvant se trouver à l'intérieur de la vanne vers la canalisation d'alimentation si celle-ci est accidentellement mise en dépression. En effet, dans ce cas, cette mise en dépression entraîne la fermeture du clapet 47 en coopération avec le ressort 48.

Le clapet principal 11 disposé à l'intérieur de la cartouche, reste appliqué par l'intermédiaire d'un joint annulaire 56 contre le siège 57. Ce siège est monté mobile par coulissement axial sur la pièce de fond 5 avec interposition d'un joint d'étanchéité $57_1$. Ce siège 57 est mobile par coulissement coaxialement au tube 10 à l'encontre d'un ressort 58. Il est pourvu d'une extrémité évasée conique $57_2$ qui forme un clapet coopérant avec un siège correspondant 59 formé sur la pièce de base 5. La partie de clapet $57_2$ du siège coulissant 57 est d'un diamètre supérieur au diamètre de la partie cylindrique de ce siège 57 coulissant dans le corps de base 5. Cette disposition permet d'obtenir une force différentielle de la pression de fluide sur les deux faces du siège 57 afin qu'il tende constamment à se fermer en coopération avec le ressort 58.

Le siège 57 et plus précisément son clapet $57_2$, sont disposés à l'intérieur d'une chambre 60 qui est reliée par un perçage 61, au volume 30 formé à l'extérieur de la cartouche 1 et du tube 42. Lors de l'ouverture du clapet $57_2$ le fluide du volume 30 s'écoule donc vers l'orifice de vidange 34 en passant par le perçage 33 sur lequel débouche le perçage 31. Ce perçage 31 débouche donc sur le perçage 33 en aval du clapet $57_2$.

Dans cette construction, l'ouverture de la vanne se produit lors de l'actionnement de la tige de manoeuvre 29 qui repousse la tige 21 en écartant le clapet secondaire 22 de son siège formé à l'extrémité inférieure du clapet principal 11 solidaire du tube 10. Lorsque le clapet secondaire 22 s'écarte de son siège, les languettes 36 viennent se placer sur le bord opposé des saillies 37 et maintiennent donc ce clapet secondaire 22 en position d'ouverture.

L'eau sous pression pénètre alors dans la chambre principale 16 en passant par l'espace formé entre le tube 10 et la tige 21 et la pression de l'eau dans cette chambre 16 repousse le piston 12 à l'encontre du ressort 15 pour ouvrir la vanne en séparant le clapet 11 du siège mobile 57.

Le piston 12 en poursuivant son mouvement de descente, vient appliquer le clapet secondaire 22 contre la traverse de butée 27, ce qui a pour effet d'écarter élastiquement les languettes 36 qui reviennent s'encliqueter sur le bord opposé des saillies 37 en verrouillant ainsi, en position de fermeture, le clapet secondaire 22.

A ce stade, la vanne commence à se fermer de manière temporisée, cette temporisation dépendant de la section de la rainure de fuite $6_1$ de la face interne du cylindre 6. Ainsi, au fur et à mesure que l'eau s'écoule par cette rainure de fuite $6_1$, la pression dans la chambre 16 diminue tandis que le ressort 15 tend à faire remonter le piston 12 dans le cylindre 6. A proximité de la fin du mouvement de soulèvement du piston 12, le clapet principal 11 vient en appui contre le siège mobile 57 en le soulevant à l'encontre du ressort 58. Cela a pour effet, après la fermeture du clapet principal 11, d'ouvrir le clapet $57_2$ afin de permettre à l'eau qui se trouve dans le volume 30 de s'évacuer vers l'orifice de vidange 34 en passant par le perçage 61, la chambre 60, l'espace annulaire formé entre le clapet $57_2$ et son siège 59, le perçage 32 et la rainure annulaire 33.

Ce clapet 52, qui permet la vidange automatique de la vanne dès sa fermeture, évite donc la détérioration de cette vanne en cas de gel.

## Revendications

1) Vanne à fermeture automatique temporisée comprenant un clapet principal (11) d'obturation du conduit d'écoulement de fluide et un clapet secondaire (22), de soulagement du clapet principal, disposé en liaison avec un moyen de commande (29) pour l'ouverture de la vanne, ce clapet principal (11) étant solidaire d'un piston (12) se déplaçant dans un cylindre (6) à l'encontre d'un ressort (15), le piston délimitant dans le cylindre deux chambres dont l'une (17) est reliée à l'air libre, et dont l'autre (16) constitue une chambre de pression, ces deux chambres étant en outre reliées par un orifice de fuite calibré, le clapet secondaire (22) obturant un conduit d'écoulement (10) du fluide vers cette chambre de pression (16), vanne caractérisée en ce que les deux clapets principal (11) et secondaire (22) sont reliés mécaniquement l'un à l'autre par un dispositif de verrouillage (23, 24, 25) maintenant le clapet secondaire (22) en position d'ouverture dès son actionnement d'ouverture par le moyen de commande (29) et maintenant ce clapet secondaire (22) en position de fermeture dès son actionnement de fermeture par une butée (27) prévue dans la vanne.

2) Vanne conforme à la revendication 1, caractérisée en ce que le clapet secondaire (22) est solidaire d'une tige (21) disposée avec jeu au travers d'un tube (10) reliant rigidement le clapet principal (11) et le piston (12), ce tube constituant le conduit d'écoulement du fluide vers la chambre de pression (16), cette tige étant séparée mécaniquement du moyen de commande (29) afin d'être reliée à cette tige et au clapet secondaire uniquement lors de son actionnement pour l'ouverture de la vanne.

3) Vanne conforme à l'une quelconque des revendications précédentes, caractérisée en ce que le moyen de verrouillage du clapet secondaire dans les positions de fermeture et d'ouverture est constitué par un élément semi-rigide, déformable élastiquement, fixé à l'un des clapets et agissant, par une coopération d'encliquetage, avec l'autre clapet.

4) Vanne conforme à l'une quelconque des revendications précédentes, caractérisée en ce que les clapets principal (11) et secondaire (22), et leurs sièges respectifs, ainsi que le cylindre (6) contenant le piston (12) solidaire du clapet principal forment un sous-ensemble mécanique constituant un cartouche s'adaptant de manière amovible à l'intérieur du corps de la vanne.

5) Vanne conforme à la revendication 1, caractérisée en ce que le conduit de mise à l'air libre de la chambre du cylindre (6) est constitué par une tubulure (18) débouchant, d'une part, à l'une des extrémités (19) du cylindre, d'autre part, à l'extérieur du corps de vanne, indépendamment de l'ouverture (3) de sortie du fluide de la vanne.

6) Vanne conforme à l'une quelconque des revendications précédentes, caractérisée en ce que le clapet principal (11) solidaire du piston (12) s'applique sur un siège mobile (57), ce siège mobile constituant lui-même un clapet ($57_2$) coopérant avec un siège correspondant (59) du cylindre (6) pour isoler ou relier la vanne à un orifice de vidange (34), cette disposition assurant la vidange automatique de la vanne après sa fermeture.

7) Vanne conforme à la revendication 6, caractérisée en ce que le siège mobile (57) coopérant avec le clapet principal (11) est placé par sa partie de clapet ($57_2$) à l'intérieur d'une chambre (60) reliée directement à un volume (30) formé entre un corps de vanne (1) et le cylindre (6).

8) Vanne conforme à l'une quelconque des revendications 6 et 7, caractérisée en ce que la chambre (17) du cylindre (6) qui est relié à l'air libre, est reliée à l'orifice de vidange en aval du clapet ($57_2$) constitué par le siège mobile (57) coopérant avec le clapet principal (11).

9) Vanne conforme à l'une quelconque des revendications précédentes, caractérisée en ce que le clapet principal et le clapet secondaire sont disposés dans une enceinte fermée (46) pourvue d'un clapet (47) s'ouvrant sous l'action de la pression du fluide.

10) Vanne conforme à la revendication 6, caractérisée en ce que le corps de vanne est pourvu d'un clapet (52) disposé en liaison avec l'orifice de raccordement de la vanne à la source de fluide sous pression, des moyens (53) étant prévus pour assurer l'ouverture de cette vanne lors de la mise en place du sous-ensemble comprenant le cylindre (6), dans le corps (1) de la vanne.

(11) Vanne conforme à l'une quelconque des revendications précédentes, caractérisée en ce que le sous-ensemble comprenant le cylindre (6) est pourvu d'une jupe ($43_1$) partiellement évidée disposée en regard de la canalisation ($39_1$) d'écoulement de fluide, ce sous-ensemble étant fixé de manière réglable à l'intérieur du corps de façon à régler le débit de la vanne par l'intermédiaire de cette jupe en réglant la position du sous-ensemble sur le corps de vanne.

**FIG. 1**

**FIG. 2**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | DE-C-551976 (KUMMER)<br>* revendication 1; figure 1 *<br>--- | 1, 2 | F16K21/12 |
| A | WO-A-8702751 (MASCO)<br>* revendications 1, 3, 4 *<br>--- | 1 | |
| A | US-A-2280309 (GRAHAM)<br>* figure 2 *<br>--- | 1 | |
| D,A | FR-A-2120894 (KNAPP)<br>----- | | |

DOMAINES TECHNIQUES
RECHERCHES (Int. Cl.5)

F16K

Le présent rapport a été établi pour toutes les revendications

| Lieu de la recherche | Date d'achèvement de la recherche | Examinateur |
|---|---|---|
| BERLIN | 03 AVRIL 1990 | SCHLABBACH M. |